# EUROPÄISCHE PATENTSCHRIFT

(11) **EP 2 734 398 B1**
(45) Veröffentlichungstag und Bekanntmachung des Hinweises auf die Patenterteilung: **07.12.2016**
(21) Anmeldenummer: 12729883.4
(22) Anmeldetag: 26.06.2012
(51) Int. Cl.: B60K 37/06, G06F 3/00

(54) **VERFAHREN ZUR BEDIENUNG EINES MOBILEN GERÄTES MITTELS EINES KRAFTFAHRZEUGS**
METHOD FOR OPERATING A MOBILE DEVICE BY MEANS OF A MOTOR VEHICLE
PROCÉDÉ DE COMMANDE D'UN APPAREIL MOBILE AU MOYEN D'UN VÉHICULE AUTOMOBILE

(30) Priorität: 23.07.2011 DE 102011108466; 15.10.2011 DE 102011116131
(43) Veröffentlichungstag der Anmeldung: 28.05.2014
(73) Patentinhaber: Volkswagen Aktiengesellschaft, 38440 Wolfsburg (DE)
(72) Erfinder: HÜGER, Fabian, 38124 Braunschweig (DE); NEUNER, Helge, 38300 Wolfenbüttel (DE); MIRTSCHINK, Michael, 10249 Berlin (DE)
(86) Internationale Anmeldenummer: PCT/EP2012/002678
(87) Internationale Veröffentlichungsnummer: WO 2013/013748

(56) Entgegenhaltungen:
- WO-A2-2004/068424
- US-A1- 2012 151 214

## Beschreibung

Die vorliegende Anmeldung betrifft ein Verfahren zur Anzeige von Informationen sowie Bedienung eines nicht einem Kraftfahrzeug direkt zugeordneten mobilen Geräts mittels einer elektronischen Einrichtung mit einer Anzeige- und Bedieneinrichtung eines Kraftfahrzeugs.

Die Anbindung eines mobilen Geräts, etwa eines Mobiltelefons oder eines tragbaren MP3-Abspielgeräts, an elektronische Einrichtungen des Kraftfahrzeugs ist im Stand der Technik bekannt. So können Mobiltelefone an eine im Kraftfahrzeug vorhandene Freisprecheinrichtung angebunden werden; mobile MP3-Abspielgeräte können zur Wiedergabe der auf dem mobilen Gerät gespeicherten Musik an die Audioanlage des Kraftfahrzeugs angebunden werden. Solche Verbindungen können beispielsweise drahtlos mittels Bluetooth realisiert werden. Ebenso ist bekannt, Bedienelemente zur Bedienung der mobilen Geräte, z.B. zur Annahme eines eingehenden Anrufs oder zur Regulierung der Wiedergabe-Lautstärke, vorzusehen. Diese Bedienelemente können beispielsweise auf der Mittelkonsole oder auf dem Lenkrad angeordnet sein.

Weiterhin ist im Stand der Technik die Anbindung mobiler Geräte, z.B. Smartphones oder PDAs, an eine Anzeige- und Bedienvorrichtung eines Kraftfahrzeugs im sogenannten "Terminal Mode" bekannt (Industriestandard "Terminal Mode Technical Architecture", Release Version 1.0, www.terminalmode.org). Auf mobilen Geräten der genannten Art kann eine Vielzahl von Programmen, häufig als "Apps" bezeichnet, ausgeführt werden. Ist das mobile Gerät im Terminal Mode mit der Bedien- und Anzeigevorrichtung des Kraftfahrzeugs gekoppelt, so wird das Programm selbst weiterhin auf dem mobilen Gerät ausgeführt. Die Anzeige erfolgt jedoch mittels der Anzeigeeinrichtung des Kraftfahrzeugs und die Bedienung des Programms erfolgt mittels der Bedienvorrichtung des Kraftfahrzeugs. Zur Übertragung der Anzeigeinhalte vom Kraftfahrzeug zum mobilen Gerät sowie zur Übertragung der mittels der Bedienvorrichtung erzeugten Befehle vom Kraftfahrzeug zum mobilen Gerät werden geeignete Datenübertragungsverfahren wie z. B. USB, WLAN oder Bluetooth verwendet.

Es ist weiterhin bekannt, die Ausführung von Programmen, welche zur Ausführung und zur Darstellung im Terminal Mode während der Fahrt nicht geeignet sind, da sie den Fahrzeugführer ablenken könnten, mit einem entsprechenden Attribut zu kennzeichnen und die Darstellung dieser Programme im Terminal Mode während der Fahrt zu unterbinden.

Aus der WO 2004/068424 A2 ist ein Verfahren zur Anzeige von Informationen und Bedienung eines mobilen Geräts mittels einer elektronischen Einrichtung mit einer Anzeige- und Bedieneinrichtung eines Kraftfahrzeugs mit folgenden Merkmalen:
- Speichern eines auf dem mobilen Geräte lauffähigen Programms, welches Programmteile für eine Benutzeroberfläche feste Bereiche zur Darstellung veränderlicher Inhalte aufweist und
- Speichern eines digitalen Zertifikats, welches den Programmteilen für die Benutzeroberfläche und für die Bedienabläufe des auf dem mobilen Gerät lauffähigen Programms zugeordnet ist.

Aus der US-Patentanmeldung 12/966,802 ist ein Verfahren bekannt, bei welchem die Ausführung eines Programms im Terminal Mode von der erfolgreichen Verifizierung eines dem Programm zugeordneten digitalen Zertifikats abhängig gemacht wird, wobei das Verfahren folgende Schritte umfasst:
- Speichern eines auf einem mobilen Gerät lauffähigen Programms und eines dem Programm zugeordneten digitalen Zertifikats in dem mobilen Gerät;
- Senden des digitalen Zertifikats von dem mobilen Gerät zu einem Kraftfahrzeug;
- Verifizieren des digitalen Zertifikats in dem Kraftfahrzeug;
- bei erfolgreicher Verifikation des digitalen Zertifikats: Darstellen von dem auf dem mobilen Gerät lauffähigen Programm zugeordneten Informationen mittels eines Displays des Kraftfahrzeugs; und
- Bedienen des auf dem mobilen Gerät lauffähigen Programms mittels einer dem Display zugeordneten Bedienanordnung des Kraftfahrzeugs.

In vorteilhafter Ausführung wird das Zertifikat von einem Zertifizierungsserver ausgestellt. Der Betreiber dieses Servers bescheinigt durch das digitale Signieren des Zertifikats, dass das Programm zur Ausführung im Terminal Mode geeignet ist.

Das in der US 12/966,802 offenbarte Verfahren wird bezüglich der vorliegenden Erfindung als nächstliegender Stand der Technik angesehen. Bei dem in der US 12/966,802 beschriebenen Verfahren wird die Darstellung und Bedienung des auf dem mobilen Gerät lauffähigen Programms mittels der Anzeige- und Bedienvorrichtung des Kraftfahrzeugs im Terminal Mode nach erfolgreicher Verifizierung des dem Programm zugeordneten digitalen Zertifikats zugelassen. Hierdurch wird gewährleistet, dass nur zertifizierte Programme ausgeführt werden können. Es besteht jedoch die Möglichkeit der missbräuchlichen Benutzung der Anzeige- und Bedienvorrichtung des Kraftfahrzeugs, indem ein nicht-zertifiziertes Programm sich im Anschluss an die erfolgreiche Überprüfung des dem zertifizierten Programm zugeordneten Programms der Anzeige- und Bedienvorrichtung gegenüber als dieses Programm ausgibt. Wenn das nicht-zertifizierte Programm die Datenübertragung des zertifizierten Programms zur Anzeige- und Bedienvorrichtung unterbindet, so besteht keine Möglichkeit, die missbräuchliche Benutzung der Anzeige- und Bedienvorrichtung zu erkennen. Es ist dabei sowohl denkbar, dass das nicht-zertifizierte Programm auf demselben mobilen Gerät wie das zertifizierte Programm ausgeführt wird, als auch, dass das nicht-zertifizierte Programm auf einem zweiten mobilen Gerät ausgeführt wird, welches sich im Kommunikationspfad zwischen dem ersten mobilen Gerät und der Anzeige- und Bedienvorrichtung des Kraftfahrzeugs befindet, wobei das zweite mobile Gerät die direkte Kommunikation zwischen dem ersten mobilen Gerät und der Anzeige- und Bedienvorrichtung des Kraftfahrzeugs unterbindet und sich bei der Kommunikation mit dem ersten mobilen Gerät als Anzeige- und Bedienvorrichtung des Kraftfahrzeugs ausgibt und umgekehrt (sogenannter "Man-in-the-middle"-Angriff).

Hieraus ergibt sich die technische Aufgabe, ein Verfahren zur Anzeige von Informationen und/oder Bedienung eines nicht einem Kraftfahrzeug direkt zugeordneten mobilen Geräts mittels einer elektronischen Einrichtung mit einer Anzeige- und Bedieneinrichtung eines Kraftfahrzeugs zu entwickeln, welches eine verbesserte Kontrolle über die Darstellung und/oder Bedienung des Programms erlaubt.

Diese Aufgabe wird erfindungsgemäß mit den Merkmalen des Anspruchs 1 gelöst. Die abhängigen Ansprüche stellen vorteilhafte Ausbildungen des beanspruchten Verfahrens dar.

Erfindungsgemäß umfasst das auf dem mobilen Gerät lauffähige Programm Programmteile für eine Benutzeroberfläche und für Bedienabläufe des Programms. Für die Gesamtheit aus Benutzeroberfläche und Bedienabläufen wird im Folgenden der allgemein gebräuchliche Begriff "Graphical User Interface" (GUI) verwendet. Bei der Bedienung des Programms mittels der elektronischen Einrichtung mit der Anzeige- und Bedieneinrichtung des Kraftfahrzeugs ist das mobile Gerät mit der elektronischen Einrichtung des Kraftfahrzeugs verbunden (z.B. im oben beschriebenen Terminal Mode). Die Darstellung der Benutzeroberfläche des GUI erfolgt somit mittels der Anzeigeeinrichtung des Kraftfahrzeugs und die Steuerung der Bedienabläufe des GUI erfolgt mittels der Bedieneinrichtung des Kraftfahrzeugs.

Weiterhin ist erfindungsgemäß vorgesehen, dass das digitale Zertifikat dem GUI zugeordnet ist. Die Programmteile für die Benutzeroberfläche und für die Bedienabläufe mit dem zugehörigen Zertifikat werden von dem mobilen Gerät zu der elektronischen Einrichtung des Kraftfahrzeugs übertragen. Das Zertifikat wird in der elektronischen Einrichtung des Kraftfahrzeugs überprüft. Bei erfolgreichem Ausgang der Überprüfung werden die Programmteile für die Benutzeroberfläche und für die Bedienabläufe des Programms in der elektronischen Einrichtung ausgeführt. Die Benutzeroberfläche wird nun in der Anzeigevorrichtung des Kraftfahrzeugs dargestellt und ist über die Bedienvorrichtung des Kraftfahrzeugs steuerbar.

Nach der Erfindung sind in der Benutzeroberfläche feste Bereiche für die Darstellung veränderlicher Inhalte vorgesehen. Auf diese Weise können in der Benutzeroberfläche in begrenztem Umfang veränderliche Inhalte angezeigt werden, welche nicht durch ein zugehöriges digitales Zertifikat als vertrauenswürdig ausgewiesen werden. Die oben beschriebene Gefahr einer missbräuchlichen Verwendung der Anzeigevorrichtung des Kraftfahrzeugs, etwa durch den genannten Man-in-the-middle-Angriff, beschränkt sich somit auf die Anzeige von Informationen in den festen Bereichen der Benutzeroberfläche.

In vorteilhafter Ausgestaltung der Erfindung wird das digitale Zertifikat von einem Zertifizierungsserver ausgestellt. Die Zuordnung des Zertifikats zu den Programmteilen für die Benutzeroberfläche und für die Bedienabläufe wird ebenfalls mittels des Zertifizierungsservers vorgenommen.

Vorzugsweise verwendet der Zertifizierungsserver zur Zertifizierung des GUI, d.h. zur Ausstellung des digitalen Zertifikats und Zuordnung des digitalen Zertifikats zum GUI, asymmetrische Signierungsverfahren, d.h. Verfahren, die zur Signierung von Inhalten einen privaten Schlüssel verwenden und zur Überprüfung der Signatur einen zu dem privaten Schlüssel passenden öffentlichen Schlüssel verwenden. Hierzu verfügt der Server über eines oder mehrere Schlüsselpaare, wobei jeweils der öffentlichen Schlüssel eines jeden Schlüsselpaares in der elektronischen Einrichtung des Kraftfahrzeugs hinterlegt ist oder über eine gesicherte Datenverbindung vom Zertifizierungsserver oder von einer anderen vertrauenswürdigen Quelle an die elektronische Einrichtung des Kraftfahrzeugs übertragen wird. Eine vertrauenswürdige Quelle zeichnet sich in diesem Zusammenhang dadurch aus, dass ihr von einem Server, der der elektronischen Einrichtung des Fahrzeugs bereits als vertrauenswürdig bekannt ist, mittels eines Zertifikats als vertrauenswürdig gekennzeichnet wurde. Auf diese Weise ist es zum Beispiel möglich, dass der Zertifizierungsserver einem anderen Server ein digitales Zertifikat ausstellt, mit welchem sich dieser der elektronischen Einrichtung des Kraftfahrzeugs gegenüber als vertrauenswürdig ausweisen kann.

Vorzugsweise umfasst das Zertifikat unter anderem einen digitalen Fingerabdruck (einen sogenannten Hashwert), welcher vom Zertifizierungsserver mittels des privaten Schlüssels des verwendeten Schlüsselpaares aus der GUI erstellt wird. Das Verfahren kann die Erstellung des Zertifikats nach Maßgabe des ITU-T-Standards X.509 vorsehen.

Es ist zweckmäßig, dass das auf dem mobilen Gerät lauffähige Programm und das dem GUI zugeordnete Zertifikat vom Zertifizierungsserver zum mobilen Gerät gesendet werden. Die Übertragung kann über das Internet erfolgen. Andere Übertragungsarten sind denkbar.

In weiterer Ausgestaltung der Erfindung werden die veränderlichen Inhalte, zu deren Darstellung die festen Bereiche des GUI vorgesehen sind, von dem mobilen Gerät an die elektronische Einrichtung des Kraftfahrzeugs übertragen. Solche Inhalte können sowohl von dem auf dem mobilen Gerät ausgeführten Programm zur Laufzeit erzeugt werden als auch auf dem mobilen Gerät in Datenform vorliegen. In einer weiteren Ausführungsform ist die elektronische Einrichtung mit einem Datenbussystem des Kraftfahrzeugs verbunden und bezieht Daten aus diesem Datenbussystem, welche entweder unmittelbar oder nach geeigneter Umwandlung, Bearbeitung oder Formatierung durch die elektronische Einheit als veränderliche Inhalte zur Darstellung geeignet sind.

Das Verfahren kann einen zusätzlichen Schritt umfassen, bei welchem die aus dem mindestens einen Bussystem des Kraftfahrzeugs bezogenen Daten zunächst von der elektronischen Einrichtung des Kraftfahrzeugs zu dem mobilen Gerät gesendet werden. Dort werden sie verarbeitet und anschließend in verarbeiteter Form wieder an die elektronische Einrichtung gesendet. Welche Fahrzeugdaten die elektronische Einrichtung aus dem Datenbussystem des Kraftfahrzeugs gewinnen und an das mobile Gerät übertragen darf, ist in den Programmteilen für die Benutzeroberfläche und für die Bedienabläufe des Programms festgelegt. Somit ist dieser Datenzugriff durch den vertrauenswürdigen Zertifizierungsserver autorisiert und vor Missbrauch geschützt.

In weiterer Ausgestaltung der Erfindung umfasst das Verfahren das Übertragen mindestens eines mittels der Bedieneinrichtung erzeugten Befehls zum mobilen Gerät. Vorzugsweise wird das auf dem mobilen Gerät lauffähige Programm in Abhängigkeit von diesem mindestens einen Befehl gesteuert.

Die Erfindung wird nachfolgend unter Bezugnahme auf die beigefügten Zeichnungen anhand eines Ausführungsbeispiels näher erläutert. Es zeigen
- Fig. 1: ein Ausführungsbeispiel eines Kraftfahrzeugs in einer Prinzipdarstellung;
- Fig. 2: ein Ausführungsbeispiel für einen Datenaustausch zwischen einem Zertifizierungsserver, einem mobilen Gerät und einer elektronischen Einrichtung in einem Kraftfahrzeug;
- Fig. 3: eine bespielhafte Darstellung einer Benutzeroberfläche mittels der Anzeigevorrichtung des Kraftfahrzeugs.

Im Folgenden werden Ausführungsbeispiele der Erfindung unter Bezugnahme auf die beigefügten Zeichnungen detailliert erläutert. Es ist zu bemerken, dass diese Ausführungsbeispiele lediglich als Beispiel dienen und nicht als einschränkend auszulegen sind. Insbesondere ist die Beschreibung eines Ausführungsbeispiels mit einer Vielzahl von Merkmalen nicht dahingehend auszulegen, dass alle diese Merkmale zur Ausführung der Erfindung nötig sind, da andere Ausführungsbeispiele weniger Merkmale und/oder alternative Merkmale aufweisen können. Zudem ist zu bemerken, dass Merkmale verschiedener Ausführungsbeispiele miteinander kombiniert werden können, sofern nichts anderes angegeben ist.

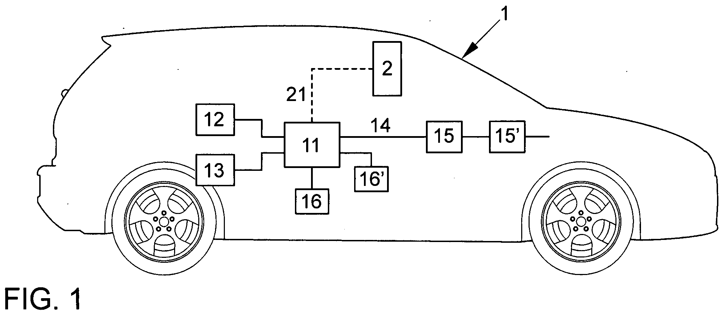

In Fig. 1 ist ein Kraftfahrzeug 1 dargestellt, welches zur Umsetzung des erfindungsgemäßen Verfahrens geeignet ist. Das Kraftfahrzeug umfasst eine elektronische Einrichtung 11 mit einer Anzeigevorrichtung 12 und einer Bedienvorrichtung 13. Weiterhin ist das Vorhandensein eines mobilen Geräts 2 dargestellt, welches nicht dem Kraftfahrzeug 1 zugeordnet ist. Das bedeutet, dass das mobile Gerät 2 nicht Bestandteil des Kraftfahrzeug 1 ist. Das mobile Gerät 2 ist über eine geeignete Datenverbindung 21 mit der elektronischen Einrichtung 11 verbunden. Eine solche Datenverbindung kann beispielsweise drahtlos, z.B. als Bluetooth-Verbindung, oder drahtgebunden, etwa als USB-Verbindung, ausgeführt sein. In der Prinzipdarstellung von Fig. 1 umfasst die elektronische Einrichtung 11 mehrere, in einem Kraftfahrzeug auch durch getrennte, aber miteinander verbundene Geräte, Einheiten und Vorrichtungen realisierbare Funktionsblöcke. So kann die elektronische Einrichtung 11 eines oder mehrere Steuergeräte zur Steuerung der Anzeige- und Bedienvorrichtung, eine oder mehrere Vorrichtungen zum Datenaustausch mit einem oder mehreren mit dem Fahrzeug verbundenen mobilen Geräten, eine oder mehrere Vorrichtungen zur Datenkommunikation mit mindestens einer weiteren Einrichtung 15, 15' des Kraftfahrzeugs mittels mindestens eines Datenbussystems 14, 14' des Kraftfahrzeugs sowie weitere Vorrichtungen und Steuergeräte 16, 16', z.B. Navigationsgeräte, Audioanlagen, Infotainmentanlagen, umfassen und / oder zusammenfassen.

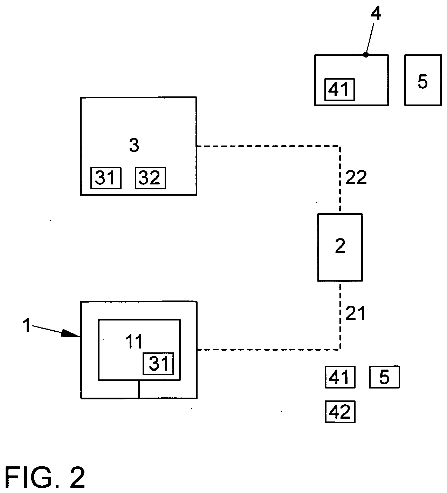

Fig. 2 zeigt beispielhaft die Datenübertragung, die gemäß dem erfindungsgemäßen Verfahren in vorteilhafter Weise zwischen dem Zertifizierungsserver 3, dem mobilen Gerät 2 und der elektronischen Einrichtung des Kraftfahrzeugs 11 abläuft.

Im gezeigten Ausführungsbeispiel sendet der Zertifizierungsserver 3 das auf dem mobilen Gerät lauffähige Programm 4, welches Programmteile für die Benutzeroberfläche und für die Bedienabläufe des Programms (GUI) 41 umfasst, zusammen mit dem digitalen Zertifikat 5 an das mobile Gerät. Eine solche Übertragung kann beispielsweise über breitbandige drahtlose Internetverbindungen (UMTS, LTE) 22 erfolgen.

Das digitale Zertifikat 5 kann unter anderem folgende Informationen umfassen:
▪ Den Namen oder eine andere eindeutige Bezeichnung des Ausstellers;
▪ Informationen zu den Regeln und Verfahren, unter denen das Zertifikat 5 ausgegeben wurde;
▪ Informationen zur Gültigkeitsdauer des Zertifikats 5;
▪ Den öffentlichen Schlüssel 31, zu dem das Zertifikat 5 Angaben macht;
▪ Den Namen (oder eine andere eindeutige Bezeichnung) des Eigentümers des öffentlichen Schlüssels 31;
▪ Weitere Informationen zum Eigentümer des öffentlichen Schlüssels 31;
▪ Angaben zum zulässigen Anwendungs- und Geltungsbereich des öffentlichen Schlüssels 31;
▪ Eine digitale Signatur des Ausstellers über die Programmteile für die Benutzeroberfläche und für die Bedienabläufe des Programms (GUI) 41;
▪ Eine digitale Signatur des Ausstellers über alle anderen Informationen.

Die digitale Signatur, mit der das Zertifikat 5 eindeutig dem GUI zugeordnet wird, kann durch unmittelbare Anwendung des privaten Schlüssels 32 des Zertifizierungsservers 3 auf die Programmteile für die Benutzeroberfläche und für die Bedienabläufe 41 erstellt werden. In der elektronischen Einrichtung des Kraftfahrzeugs 11 kann der zum privaten Schlüssel 32 passende öffentliche Schlüssel 31 des Zertifizierungsservers 3 auf die digitale Signatur angewendet werden und so die Authentizität der übertragenen Programmteile für die Benutzeroberfläche und für die Bedienabläufe 41 überprüft werden. Vorteilhafter ist es jedoch, aus den Programmteilen 41 zunächst einen digitalen Fingerabdruck (Hashwert) zu berechnen. Dieser kennzeichnet die Programmteile 41 in eindeutiger Weise (d.h. zwei unterschiedliche Nachrichten ergeben mit an Sicherheit grenzender Wahrscheinlichkeit zwei unterschiedliche Hashwerte), weist aber ein deutlich geringeres Datenvolumen (z.B. 160 Bit) auf. Die digitale Signatur wird dann durch Anwendung des privaten Schlüssels 32 des Zertifizierungsservers 3 auf den Hashwert erstellt. Wegen der erwähnten eindeutigen Zuordnung des Hashwert zu den Programmteilen 41 ist sichergestellt, dass das Zertifikat 5 dem GUI 41 zugeordnet ist.

Das mobile Gerät 2 überträgt die Programmteile für die Benutzeroberfläche und für die Bedienabläufe des Programms 41 zusammen mit dem digitalen Zertifikat 5 über die Datenverbindung 21 an die elektronische Einheit 11 des Kraftfahrzeugs 1. Dort wird mittels der bereits erwähnten Anwendung des öffentlichen Schlüssels 31 auf die digitale Signatur der Hashwert der Programmteile 41 gewonnen. Weiterhin wird in der elektronischen Einrichtung 11 der Hashwert aus den übertragenen Programmteilen 41 berechnet. Stimmen beide Hashwerte überein, ist die Überprüfung erfolgreich abgeschlossen und die Programmteile 41 werden ausgeführt. Sobald die Programmteile 41 ausgeführt werden, können über die Datenverbindung 21 Daten und Inhalte ausgetauscht werden.

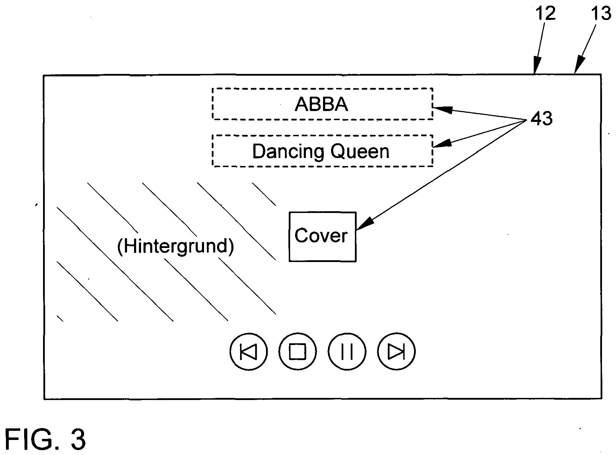

Die Ausführung eines Programms 4 gemäß dem beanspruchten Verfahren ab dem Zeitpunkt der erfolgreichen Überprüfung des Zertifikats soll im Folgenden anhand des Beispiels eines MP3-Abspielprogramms näher erläutert werden. Hierzu zeigt Fig. 3 eine bespielhafte Darstellung einer Benutzeroberfläche mittels der Anzeigevorrichtung 12 des Kraftfahrzeugs 13. Im dargestellten Beispiel handelt es sich bei der Anzeigevorrichtung um einen Touchscreen, also um eine berührungsempfindliche Anzeigefläche. Somit zeigt Fig. 3 zugleich die Bedienvorrichtung 13 des Kraftfahrzeugs 1. Es ist anzumerken, dass diese Ausführungsform der Bedienvorrichtung 13 nur beispielhaft zu verstehen ist. Das beschriebene Verfahren eignet sich auch für andere Ausführungsformen der Bedienvorrichtung 13. Insbesondere kann die Bedienung auch mittels Dreh-Drück-Stellern und / oder Tasten erfolgen. Die dargestellte Benutzeroberfläche ist mit Ausnahme der festen Bereiche 43 zur Darstellung veränderlicher Inhalte unveränderlich. Die Bereiche 43 umfassen ein Textfeld zur Ausgabe des Interpreten der aktuellen MP3-Datei, ein Textfeld zur Ausgabe des Titels, einen Bereich zur Darstellung des Albumcovers als Grafik sowie den Hintergrund, welcher ausschließlich in seiner Farbe veränderlich sein soll. Weiterhin sind Bedienelemente dargestellt, mittels welcher der Benutzer das Programm steuern kann (Titel zurück, Stop, Pause, Titel vor).

Der aktuell ausgewählte Titel wird zusammen mit den Inhalten "Interpret", "Titel", "Coverbild" und "Hintergrundfarbe" vom mobilen Gerät 2 über die Datenverbindung 21 zur elektronischen Einrichtung 11 übertragen. Die Audioinformation wird von der elektronischen Einrichtung 11 an die Audioausgabevorrichtung 16 des Kraftfahrzeugs 1 übertragen. Interpret, Titel, Coverbild und Hintergrundfarbe werden auf der Anzeige 12 dargestellt. Erteilt der Benutzer über die Bedienvorrichtung einen Befehl, tippt er also beispielsweise auf den "Titel-vor"-Knopf auf dem Touchscreen, wird dieser Befehl über die Datenverbindung 21 an das mobile Gerät 2 übertragen. Dort wird der nächste Titel ausgewählt und wie beschrieben mit den zugehörigen Inhalten an die elektronische Einrichtung 11 übertragen.

Im gezeigten Beispiel soll nun weiterhin vorgesehen sein, dass die Hintergrundfarbe der Anzeige in Abhängigkeit der Umgebungshelligkeit verändert wird. Es ist denkbar, dass das mobile Gerät 2 über einen Lichtsensor verfügt; in diesem Fall kann die Hintergrundfarbe ohne weiteres bestimmt und an die elektronische Einrichtung 11 übertragen werden. In einem weiteren Beispiel verfügt das Kraftfahrzeug über einen Lichtsensor 15, der seine aktuellen Messwerte über den Datenbus 14 aussendet. Die elektronische Einrichtung 11 empfängt den jeweils aktuellen Messwert über den Datenbus 14 und überträgt ihn über die Datenverbindung 21 an das mobile Gerät. Dort wird mittels des aktuellen Messwerts eine geeignete Hintergrundfarbe bestimmt und wie beschrieben zur Darstellung an die elektronische Einrichtung 11 übertragen. Weitere Beispiele für Daten, die aus dem Datenbussystem 14 gewonnen werden können und entweder unmittelbar dargestellt werden können oder zunächst zur Weiterverarbeitung an das mobile Gerät 2 übertragen werden können, umfassen je nach Zweck des Programms 4 Fahrzeugparameter (z.B. Momentangeschwindigkeit, Tankfüllstand), fahrtbezogene Daten des Navigationssystems (z.B. Position, Streckenverlauf) oder Umgebungsparameter (z.B. Außentemperatur, Helligkeit). Wie beschrieben muss in den Programmteilen 41, die durch das digitale Zertifikat 5 als vertrauenswürdig gekennzeichnet sind, festgelegt sein, auf welche Fahrzeugdaten das Programm 4 Zugriff haben darf.

Durch das erfindungsgemäße Verfahren bleiben die Möglichkeiten zum Missbrauch mittels eines Man-in-the-middle-Angriffs auf die Änderung der Anzeige der festen Bereiche 43 zur Darstellung der veränderlichen Inhalte beschränkt. Im vorgestellten Beispiel wäre die Manipulation z.B. des Titelfeldes, des Coverbilds oder der Hintergrundfarbe vorstellbar. Nicht möglich sind hingegen das Ausführen nicht zertifizierter Funktionen (etwa die Ausführung eines gänzlichen anderen Programms) oder der nicht zertifizierte Zugriff auf Fahrzeugdaten.

### Bezugszeichenliste

- 1: Kraftfahrzeug
- 2: Mobiles Gerät
- 11: Elektronische Einrichtung des Kraftfahrzeugs
- 12: Anzeigevorrichtung
- 13: Bedienvorrichtung
- 14: Datenbussystem des Kraftfahrzeugs
- 15, 15': An den Datenbus angeschlossene weitere Bauteile des Kraftfahrzeugs
- 16, 16': An die elektronische Einrichtung angeschlossene weitere Vorrichtungen des Kraftfahrzeugs (z.B. Navigationsgerät, Infotainment, etc.)
- 21: Vorrichtung zur Übertragung von Daten zwischen dem mobilen Gerät und der elektronischen Einrichtung (z.B. USB, Bluetooth, etc.)
- 3: Zertifizierungsserver
- 22: Datenverbindung, z.B. über Internet, z.B. drahtloses Internet, z.B. UMTS
- 4: Auf dem mobilen Gerät lauffähiges Programm
- 41: Programmteile für die Benutzeroberfläche und für Bedienabläufe des Programms (GUI)
- 5: Digitales Zertifikat
- 31: Öffentlicher Schlüssel des Zertifizierungsservers 3
- 32: Privater Schlüssel des Zertifizierungsservers 3
- 42: Inhalte
- 43: Bereiche zur Darstellung veränderlicher Inhalte

## Patentansprüche

1. Verfahren zur Anzeige von Informationen und / oder Bedienung eines nicht einem Kraftfahrzeug (1) zugeordneten mobilen Geräts (2) mittels einer elektronischen Einrichtung (11) mit einer Anzeige- (12) und Bedieneinrichtung (13) eines Kraftfahrzeugs (1) mit folgenden Merkmalen:
▪ Speichern eines auf dem mobilen Gerät (2) lauffähigen Programms (4), welches Programmteile (41) für eine Benutzeroberfläche und für Bedienabläufe des Programms (4) umfasst, wobei die Benutzeroberfläche feste Bereiche (43) zur Darstellung veränderlicher Inhalte aufweist;
▪ Speichern eines digitalen Zertifikates (5), welches den Programmteilen (41) für die Benutzeroberfläche und für die Bedienabläufe des auf dem mobilen Gerät (2) lauffähigen Programms (4) zugeordnet ist;
▪ Übertragen der Programmteile (41) für die Benutzeroberfläche und für die Bedienabläufe mit dem zugehörigen Zertifikat (5) von dem mobilen Gerät (2) zu der elektronischen Einrichtung (11) des Kraftfahrzeugs (1);
▪ Überprüfen des übertragenen digitalen Zertifikats (5) in der elektronischen Einrichtung (11) des Kraftfahrzeugs (1) und Ausführen der vom mobilen Gerät (2) übertragenen Programmteile (41) in Abhängigkeit der Überprüfung des übertragenen Zertifikats (5);
▪ Darstellung der veränderlichen Inhalte in den festen Bereichen (43) der Benutzeroberfläche.

2. Verfahren nach Anspruch 1, **dadurch gekennzeichnet, dass** das Zertifikat (5) zuvor von einem Zertifizierungsserver (3) ausgestellt wird, wobei das Zertifikat (5) den Programmteilen (41) für die Benutzeroberfläche und für die Bedienabläufe mittels des Zertifizierungsservers (3) zugeordnet wird.

3. Verfahren nach Anspruch 2, **dadurch gekennzeichnet, dass** der Zertifizierungsserver (3) zur Zertifizierung von Inhalten über mindestens ein Schlüsselpaar jeweils umfassend einen privaten Schlüssel (32) und einen öffentlichen Schlüssel (31) verfügt, wobei der mindestens eine öffentliche Schlüssel (31) in der elektronischen Einrichtung (11) des Kraftfahrzeugs (1) zur Überprüfung verwendet wird, wobei der mindestens eine öffentliche Schlüssel (31) in der elektronischen Einrichtung (11) des Kraftfahrzeugs (1) hinterlegt ist oder über eine gesicherte Datenverbindung vom Zertifizierungsserver (3) oder von einer anderen vertrauenswürdigen Quelle an die elektronische Einrichtung (11) des Kraftfahrzeugs (1) übertragen wird.

4. Verfahren nach Anspruch 3, **dadurch gekennzeichnet, dass** das Zertifikat (5) einen digitalen Fingerabdruck umfasst, wobei der digitale Fingerabdruck vom Zertifizierungsserver (3) mittels des privaten Schlüssels (32) aus den Programmteilen (41) für die Benutzeroberfläche und für die Bedienabläufe des auf dem mobilen Gerät (2) lauffähigen Programms (4) erstellt wird.

5. Verfahren nach Anspruch 4, **dadurch gekennzeichnet, dass** der Zertifizierungsserver (3) das Zertifikat (5) nach Maßgabe des ITU-T-Standards X.509 ausstellt.

6. Verfahren nach einem der Ansprüche 2 bis 5, **dadurch gekennzeichnet, dass** das auf dem mobilen Gerät (2) lauffähige Programm (4) und das den Programmteilen (41) für die Benutzeroberfläche und für die Bedienabläufe des auf dem mobilen Gerät (2) lauffähigen Programms (4) zugeordnete Zertifikat (5) vom Zertifizierungsserver (2) gesendet werden.

7. Verfahren nach einem der vorhergehenden Ansprüche, **dadurch gekennzeichnet, dass** die veränderlichen Inhalte von dem mobilen Gerät (2) zur elektronischen Einrichtung (11) des Kraftfahrzeugs (1) übertragen werden.

8. Verfahren nach einem der Ansprüche 1 bis 6, **dadurch gekennzeichnet, dass** die elektronische Einrichtung (11) des Kraftfahrzeugs (1) mit mindestens einem Datenbussystem (14) des Kraftfahrzeugs (1) verbunden ist und die veränderlichen Inhalte aus Daten aus dem mindestens einen Datenbussystem (14) gewonnen werden.

9. Verfahren nach den Ansprüchen 7 und 8, **dadurch gekennzeichnet, dass** die aus dem mindestens einen Bussystem (14) gewonnenen Daten von der elektronischen Einrichtung (11) des Kraftfahrzeugs (1) zur Verarbeitung durch das auf dem mobilen Gerät (2) lauffähige Programm (4) zum mobilen Gerät (2) übertragen werden und die verarbeiteten Daten vom mobilen Gerät (2) zur elektronischen Einrichtung (11) des Kraftfahrzeugs (1) übertragen werden.

10. Verfahren nach einem der vorhergehenden Ansprüche, **dadurch gekennzeichnet, dass** mindestens ein mittels der Bedieneinrichtung (13) erzeugter Befehl zum mobilen Gerät (2) übertragen wird.

11. Verfahren nach Anspruch 10, **dadurch gekennzeichnet, dass** das auf dem mobilen Gerät (2) lauffähige Programm (4) in Abhängigkeit des mindestens einen Befehls gesteuert wird.

## Claims

1. Method for displaying information and/or operating a mobile apparatus (2) not assigned to a motor vehicle (1) using an electronic device (11) having a display device (12) and an operating device (13) of a motor vehicle (1), having the following features of:
▪ storing a program (4) which is executable on the mobile apparatus (2) and comprises program parts (41) for a user interface and for operating sequences of the program (4), the user interface having fixed areas (43) for displaying variable contents;
▪ storing a digital certificate (5) which is assigned to the program parts (41) for the user interface and for the operating sequences of the program (4) which is executable on the mobile apparatus (2);
▪ transmitting the program parts (41) for the user interface and for the operating sequences with the associated certificate (5) from the mobile apparatus (2) to the electronic device (11) of the motor vehicle (1);
▪ checking the transmitted digital certificate (5) in the electronic device (11) of the motor vehicle (1) and executing the program parts (41) transmitted from the mobile apparatus (2) on the basis of the check of the transmitted certificate (5) ;
▪ displaying the variable contents in the fixed areas (43) of the user interface.

2. Method according to Claim 1, **characterized in that** the certificate (5) is issued beforehand by a certification server (3), the certificate (5) being assigned to the program parts (41) for the user interface and for the operating sequences by means of the certification server (3).

3. Method according to Claim 2, **characterized in that**, in order to certify contents, the certification server (3) has at least one key pair respectively comprising a private key (32) and a public key (31), the at least one public key (31) being used for the check in the electronic device (11) of the motor vehicle (1), the at least one public key (31) being stored in the electronic device (11) of the motor vehicle (1) or being transmitted, via a secure data connection, from the certification server (3) or from another trusted source to the electronic device (11) of the motor vehicle (1).

4. Method according to Claim 3, **characterized in that** the certificate (5) comprises a digital fingerprint, the digital fingerprint being created by the certification server (3) from the program parts (41) for the user interface and for the operating sequences of the program (4) executable on the mobile apparatus (2) by means of the private key (32).

5. Method according to Claim 4, **characterized in that** the certification server (3) issues the certificate (5) in accordance with the ITU-T standard X.509.

6. Method according to one of Claims 2 to 5, **characterized in that** the program (4) executable on the mobile apparatus (2) and the certificate (5) assigned to the program parts (41) for the user interface and for the operating sequences of the program (4) executable on the mobile apparatus (2) are transmitted by the certification server (2).

7. Method according to one of the preceding claims, **characterized in that** the variable contents are transmitted from the mobile apparatus (2) to the electronic device (11) of the motor vehicle (1).

8. Method according to one of Claims 1 to 6, **characterized in that** the electronic device (11) of the motor vehicle (1) is connected to at least one data bus system (14) of the motor vehicle (1), and the variable contents are obtained from data from the at least one data bus system (14).

9. Method according to Claims 7 and 8, **characterized in that** the data obtained from the at least one bus system (14) are transmitted from the electronic device (11) of the motor vehicle (1) to the mobile apparatus (2) for processing by the program (4) executable on the mobile apparatus (2), and the processed data are transmitted from the mobile apparatus (2) to the electronic device (11) of the motor vehicle (1).

10. Method according to one of the preceding claims, **characterized in that** at least one command generated using the operating device (13) is transmitted to the mobile apparatus (2).

11. Method according to Claim 10, **characterized in that** the program (4) executable on the mobile apparatus (2) is controlled on the basis of the at least one command.

## Revendications

1. Procédé pour afficher des informations et/ou pour commander un appareil mobile (2) non associé à un véhicule automobile (1) au moyen d'un dispositif électronique (11) muni d'un dispositif d'affichage (12) et de commande (13) d'un véhicule automobile (1), possédant les caractéristiques suivantes :
* enregistrement d'un programme (4) exécutable sur l'appareil mobile (2), lequel comprend des parties de programme (41) pour une interface d'utilisateur et pour des opérations de commande du programme (4), l'interface d'utilisateur possédant des zones fixes (43) destinées à la représentation de contenus modifiables ;
* enregistrement d'un certificat numérique (5), lequel est associé aux parties de programme (41) pour l'interface d'utilisateur et pour les opérations de commande du programme (4) exécutable sur l'appareil mobile (2) ;
* transmission des parties de programme (41) pour l'interface d'utilisateur et pour les opérations de commande avec le certificat (5) associé de l'appareil mobile (2) au dispositif électronique (11) du véhicule automobile (1) ;
* contrôle du certificat numérique (5) transmis dans le dispositif électronique (11) du véhicule automobile (1) et exécution des parties de programme (41) transmises par l'appareil mobile (2) en fonction du contrôle du certificat (5) transmis ;
* représentation des contenus modifiables dans les zones fixes (43) de l'interface d'utilisateur.

2. Procédé selon la revendication 1, **caractérisé en ce que** le certificat (5) est préalablement établi par un serveur de certification (3), le certificat (5) étant associé aux parties de programme (41) pour l'interface d'utilisateur et pour les opérations de commande au moyen du serveur de certification (3).

3. Procédé selon la revendication 2, **caractérisé en ce que** le serveur de certification (3), pour la certification des contenus, dispose d'au moins une paire de clés comprenant respectivement une clé privée (32) et une clé publique (31), l'au moins une clé publique (31) étant utilisée pour le contrôle dans le dispositif électronique (11) du véhicule automobile (1), l'au moins une clé publique (31) étant stockée dans le dispositif électronique (11) du véhicule automobile (1) ou étant transmise au dispositif électronique (11) du véhicule automobile (1) par le biais d'une liaison de données sécurisée depuis le serveur de certification (3) ou depuis une autre source de confiance.

4. Procédé selon la revendication 3, **caractérisé en ce que** le certificat (5) comprend une empreinte digitale numérique, l'empreinte digitale numérique étant créée par le serveur de certification (3) au moyen de la clé privée (32) partir des parties de programme (41) pour l'interface d'utilisateur et pour les opérations de commande du programme (4) exécutable sur l'appareil mobile (2).

5. Procédé selon la revendication 4, **caractérisé en ce que** le serveur de certification (3) établit le certificat (5) selon les indications de la norme UIT-T X.509.

6. Procédé selon l'une des revendications 2 à 5, **caractérisé en ce que** le programme (4) exécutable sur l'appareil mobile (2) et le certificat (5) associé aux parties de programme (41) pour l'interface d'utilisateur et pour les opérations de commande du programme (4) exécutable sur l'appareil mobile (2) sont envoyés par le serveur de certification (2).

7. Procédé selon l'une des revendications précédentes, **caractérisé en ce que** les contenus modifiables sont transmis de l'appareil mobile (2) au dispositif électronique (11) du véhicule automobile (1).

8. Procédé selon l'une des revendications 1 à 6, **caractérisé en ce que** le dispositif électronique (11) du véhicule automobile (1) est relié à au moins un système de bus de données (14) du véhicule automobile (1) et les contenus modifiables sont obtenus à partir de données issues dudit système de bus de données (14).

9. Procédé selon l'une des revendications 7 et 8, **caractérisé en ce que** les données issues dudit système de bus de données (14) sont transmises à l'appareil mobile (2) par le dispositif électronique (11) du véhicule automobile (1) en vue de leur traitement par le programme (4) exécutable sur l'appareil mobile (2) et les données traitées sont transmises par l'appareil mobile (2) au dispositif électronique (11) du véhicule automobile (1).

10. Procédé selon l'une des revendications précédentes, **caractérisé en ce qu'**au moins une instruction générée au moyen du dispositif de commande (13) est transmise à l'appareil mobile (2).

11. Procédé selon la revendication 10, **caractérisé en ce que** le programme (4) exécutable sur l'appareil mobile (2) est commandé en fonction de l'au moins une instruction.
